# EUROPEAN PATENT SPECIFICATION

(11) **EP 3 521 103 B1**
(45) Date of publication and mention of the grant of the patent: **15.07.2020**
(21) Application number: 19153132.6
(22) Date of filing: 22.01.2019
(51) Int. Cl.: B60N 2/16, B60N 2/68

(54) **IMPROVED SEAT HEIGHT ADJUSTMENT DEVICE**
VERBESSERTE SITZHÖHENVERSTELLVORRICHTUNG
DISPOSITIF DE RÉGLAGE DE HAUTEUR DE SIÈGE AMÉLIORÉ

(30) Priority: 23.01.2018 TW 10702407; 12.07.2018 TW 10724120
(43) Date of publication of application: 07.08.2019
(73) Proprietor: Hsin Chong Machinery Works Co. Ltd., Taoyuan City 335 (TW); Fuzhou Mingfang Automobile Parts Industry Co Ltd., Fuzhou (CN)
(72) Inventor: CHIANG, Chi-Dah, 335 Taoyuan City (TW); NIHEI, Masao, 335 Taoyuan City (TW); HSI, Jeffrey Chung-Chiang, 335 Taoyuan City (TW)
(74) Representative: 2K Patentanwälte Blasberg Kewitz & Reichel

(56) References cited:
- US-A1- 2011 266 851

## Description

### BACKGROUND OF THE INVENTION

### Field of the Invention

The present invention generally relates to seat height adjustment device and, in particular to an improved seat height adjustment device which is capable of reinforcing the structure by increasing the outer diameter of the clutch mechanism radially and also can be mounted to the seat in a general manner.

### Description of Prior Art

A seat height adjusting device usually includes a clutch mechanism and a brake mechanism which are coaxially arranged with each other, and a control handle is connected to the clutch mechanism. A user can drive the clutch mechanism through the control handle. The clutch mechanism interlocks the brake mechanism, and the output member in the brake mechanism drives the lifter in a seat such as a car seat, a massage chair or a wheelchair to control the lifting. US2011/266851 shows a seat height adjuster with a clutch, a brake, a rear bracket with mounting holes and a front cover.

However, in the case of a car seat, the distance between the car seat and the car body is limited; moreover, the aforementioned control handle must be installed. Therefore, it is impossible to increase the height of the seat height adjusting device to enhance the structural strength. Furthermore, the side of the car seat has a plurality of mounting holes for installing the seat height adjusting device, and the positions of the mounting holes are fixed for the same type of vehicles.

Under the above conditions, when the structural strength of the seat height adjusting device has to be enhanced, the inventor has found that the following problems need to be overcome. Firstly, because the height of the seat height adjustment device cannot be increased in the height direction thereof so that other ways have to be applied to enhance the structural strength. Secondly, even if the inventor tries to change the outer diameter of the clutch mechanism to enhance the structure, the screw head of all the mounting screws (to fix the seat height adjusting device to the car seat) were obscured by the enlarged clutch mechanism; therefore, users cannot drive the mounting screw through the screw head of a tool.

In view of the above drawbacks, the Inventor proposes the present invention based on his expert knowledge and elaborate researches in order to solve the problems of prior art.

### SUMMARY OF THE INVENTION

Accordingly, an object of the present invention is to provide an improved seat height adjustment device that the outer diameter of the clutch mechanism (for example, cover etc.) can be increased radially, and the seat height adjustment device can be installed and fixed in the seat in a general manner.

In order to achieve the object mentioned above, the present invention provides a seat height adjustment device for fixing to a plurality of mounting holes of a seat comprising a brake mechanism and a clutch mechanism. The brake mechanism includes a bracket, and the bracket has a plurality of fastening components that can be separately fixed corresponding to each of the mounting holes and cannot rotate with respect to the bracket. Each fastening component has a connecting end connected to the bracket. The clutch mechanism is coaxially arranged with the brake mechanism. The clutch mechanism includes a cover, and the cover has a periphery enlarged with respect to each of the connecting ends such that when the cover is correspondingly combined with the bracket it partially or completely obscures the connecting ends.

Comparing to the prior art, the present invention has the following effects. Under the premise that the positions of the mounting holes of the seat are fixed and the height of the seat height adjusting device is not increased, the structure strength of the seat height adjusting device can be enhanced and the seat height adjusting device can be easily installed and fixed to the seat in a general manner (for example, using tools such as a screwdriver or a wrench).

### BRIEF DESCRIPTION OF DRAWING

The features of the invention believed to be novel are set forth with particularity in the appended claims. The invention itself, however, may be best understood by reference to the following detailed description of the invention, which describes a number of exemplary embodiments of the invention, taken in conjunction with the accompanying drawings, in which:
FIG. 1 is a perspective explosion view of the present invention;
FIG. 2 is a perspective assembly schematic view of the present invention;
FIG. 3 is another perspective assembly schematic view of the present invention;
FIG. 4 is a front view of the present invention;
FIG. 5 is a back view of the present invention;
FIG. 6 is a cross sectional view of the present invention.

### DETAILED DESCRIPTION OF THE PREFERRED EMBODIMENTS

In cooperation with attached drawings, the technical contents and detailed description of the invention are described thereinafter according to a number of preferable embodiments, being not used to limit its executing scope. Any equivalent variation and modification made according to appended claims is all covered by the claims claimed by the present invention.

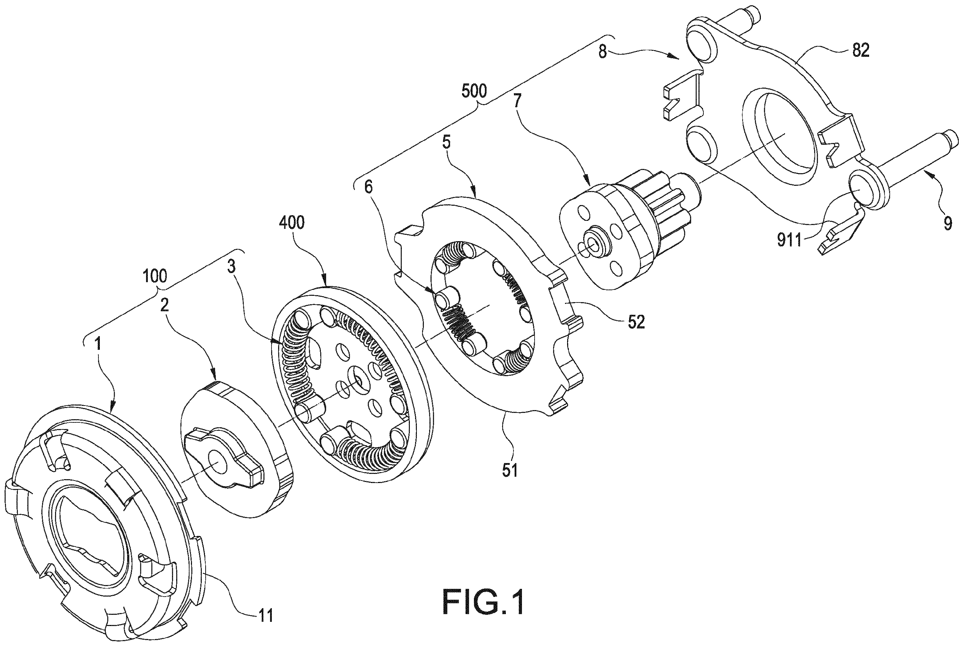

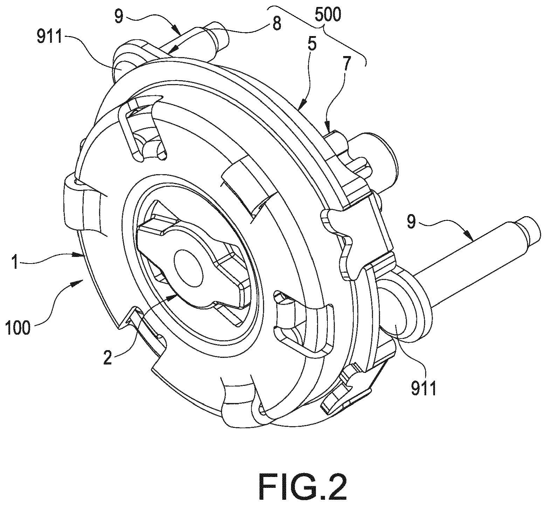

Please refer to FIG. 1 to FIG. 3, the present invention provides an improved seat height adjustment device for fixing to a plurality of mounting holes (not shown in Figures) of a seat such as a car seat, a massage chair or a wheelchair. The seat height adjustment device includes a clutch mechanism 100, a driving disk 400 and a brake mechanism 500. The driving disk 400 is disposed between the clutch mechanism 100 and the brake mechanism 500 which are coaxially arranged so that the clutch mechanism 100 can drive the brake mechanism 500 through the driving disk 400.

The clutch mechanism 100 includes a cover 1, an input member 2 and a plurality of first acting modules 3. Each first acting module 3 includes a first elastic member and a first roller set (not numbered). The driving disk 400 has formed a dented area in the front where the input member 2 and the first acting modules 3 are accommodated, and the cover 1 covers the dented area of the driving disk 400 correspondingly. The rotating of the input member 2 is controlled by a control handle (not shown) to drive the driving disk 400 through the first acting modules 3.

The brake mechanism 500 includes an annular body 5, a plurality of second acting modules 6, an output member 7 and a bracket 8. Each second acting module 6 includes a second elastic member and a second roller set (not numbered). Each of the second acting modules 6 is disposed in the annular body 5 and are driven by gears located at the back of the driving disk 400. The output member 7 is disposed to link with each active component 6. The bracket 8 is fixed to the annular body 5 and the cover 1 by its front side, and the back side of the bracket 8 is fixed at a car seat, a massage chair or a wheelchair etc. The output member 7 includes an output driving gear (not numbered), and the output driving gear is driven by a lifting mechanism mounted in a car seat, a massage chair or a wheelchair, etc.

In the brake mechanism 500, the bracket 8 has a plurality of fastening components 9 that can be separately fixed corresponding to each of the mounting holes, and the fastening components 9 cannot rotate with respect to the bracket 8. In other words, the fastening components 9 can be attached to the holder 8 (as shown) in such a manner that it cannot rotate in various ways and can be integrally formed and protruded from the back surface of the holder 8 (not shown). In terms of connections, there are many ways to make the fastening components 9 unable to rotate with respect to the bracket 8. In the present embodiment, the following paragraphs are taken as an example for explanation.

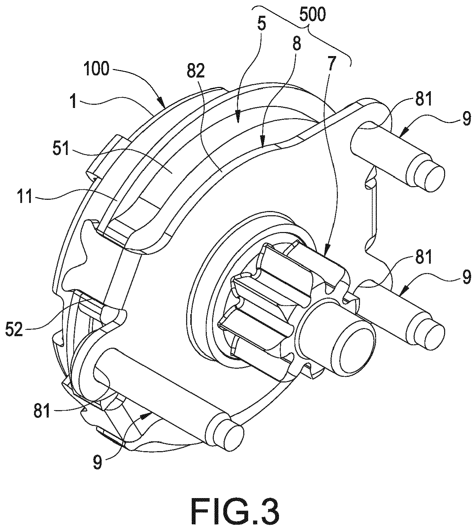

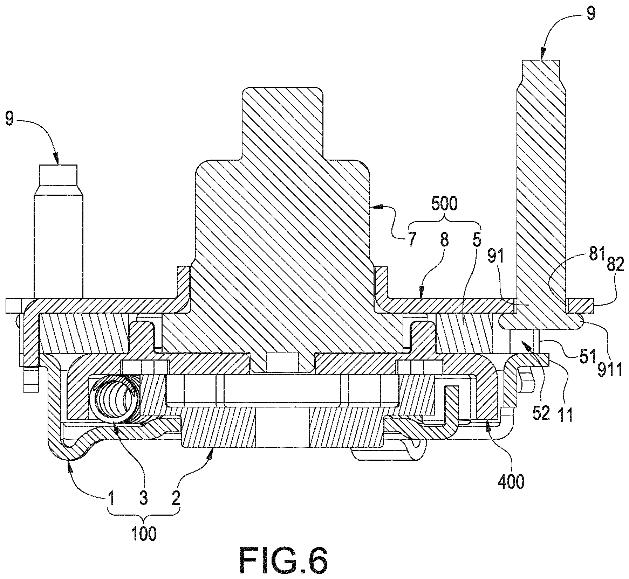

The fastening component 9 is a self-clinching part, a press part or a solder part etc., and the invention is not limited thereto, as long as the bracket 9 cannot rotate with respect to the bracket 8, and the posts can be bolts or rivets. Take bolts as an example, the fastening component 9 can be a self-clinching bolt, a press bolt or a solder bolt, etc. As shown in FIG. 1, FIG. 3 and FIG. 6, the fastening component 9 has a connecting end 91 connected to the bracket 8 (as shown in FIG. 6). The bracket 8 is provided with a plurality of connecting holes 81 corresponding to the mounting holes (as shown in FIG. 3 and FIG. 6), and each of the connecting ends 91 of the fastening components 9 are respectively fixed corresponding to the connecting holes 81 so that the fastening component 9 cannot rotate with respect to the bracket 8.

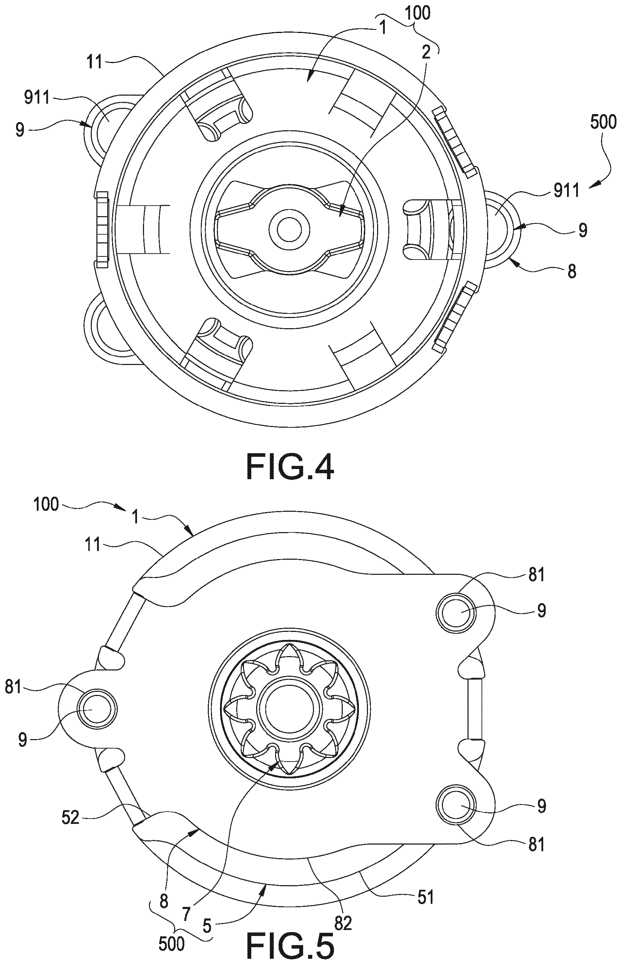

The clutch mechanism 100 has an outer diameter enlarged with respect to each of the connecting ends 91 (or each connecting hole 81). In the present embodiment, it takes the cover 1 as an example for illustration, that is, the cover 1 has an outer diameter enlarged with respect to each of the connecting ends 91 (or each connecting hole 81). Therefore, as shown in FIG. 4, FIG. 5 and FIG. 6, when the cover 1 is correspondingly combined with the bracket 8, the cover 1 can partially or completely obscure each of the connecting ends 91 (or each connecting hole 81).

Thereby, under the premise that the distance between each of the mounting holes is not increased and the overall height of the seat height adjusting device is not increased, in order to enhance the structural strength of the seat height adjustment device, the structure will only be enlarged in the width (radial direction) perpendicular to the height direction. However, since the positions of the mounting holes are not changed, the structure enlarged radially will partially or completely obscure the mounting holes so that users cannot use screwdrivers or wrenches from the front side (as shown in FIG. 4) while locking each of the fastening components 9 corresponding to each of the mounting holes. Moreover, the spacing between the cover 1 and the bracket 8 is too short so that it is impossible to rotate the fastening member 9 via the spacing by means of a special tool.

At this time, since each of the fastening members 9 of the present invention cannot rotate with respect to the fixing frame 8, therefore, even if the cover 1 partially or completely obscures each of the mounting holes (or each connecting end 91) as shown in FIGS. 4 to FIG. 6, users can just insert each fastening component 9 to each of the mounting holes and then combine or Made into several corresponding fasteners (not shown, for example, combining several nuts or making several riveted joints) from free ends of each fastening element 9. Thus, the improved seat height adjusting device of the present invention can be mounted to a seat such as a car seat, a massage chair or a wheelchair.

In a further embodiment not shown in the drawings, the input member 2 or each first acting module 3 of the clutch mechanism 100 is a structure which has an outer diameter enlarged with respect to each of the connecting ends 91. The driving disk 400 has an outer diameter enlarged with respect to each of the connecting ends 91. However, the input member 2 with enlarged outer diameter, or all of the first active components 3 or the driving disk 400 do not necessarily obscure each connecting end 91 unless the seat has provided sufficient installation space.

In another embodiment not shown in the drawings, the annular body is disposed between the driving disk 400 and the bracket 8, and the annular body 5 has an outer diameter enlarged with respect to each of the connecting ends 91 which partially or completely obscures each of the connecting ends 91. At this time, the back surface of the annular body 5 is flatly attached to the front surface of the bracket 8 as shown in FIG. 6. However, since the fastening member 9 can be integrally formed on the bracket 8 as described above or connected to the bracket 8 in a countersunk manner as described above, therefore, the fastening member 9 does not have a cap protruding from the front surface of the bracket 8, and the peripheral edge 51 of the annular body 5 can pass the connecting ends 91 directly correspondingly. Furthermore, even if each the fastening members 9 is formed with a cap body 911 corresponding to each of the connecting ends 91, the bracket 8 can be bended to form a plurality of bent portions (that is, from the front side of the bracket 8 to the back side of the bracket 8) in a manner which is not shown in drawings, and each cap body 911 is accommodated in each bent portion without protruding from the front side of the bracket 8.

In addition, as shown in FIG.1, FIG. 3 and FIG. 6, even if the fastening members 9 are formed with cap bodies 911 corresponding to each connecting end 91 respectively, and the cap bodies 911 are protruded from the front side of the bracket 8, then a plurality of notches 52 can be formed on the peripheral edge 51 of the annular body 5 corresponding to the cap bodies 911.

It is worth noting that, as shown in FIG. 1, FIG. 5 and FIG. 6, each connecting end 91 is close to the periphery 82 of the bracket 8, and each connecting end 91 is located correspondingly at the periphery 11 of the cover 1 (as shown in FIG. 5 and FIG. 6, that is, each connecting end 91 passes through the periphery 11 of the cover 1) or located within the periphery 11 of the cover 1 (not shown in figures) correspondingly.

As for the manner which the fastening member 9 cannot be rotated with respect to the holder 8, and the invention is not limited thereto. For example, in the first manner, the diameter of the connecting end 91 is larger than the diameter of the rod portion of the fastening member 9 but smaller than the diameter of the cap body 911, and the connecting end 91 of a non-circular design is embedded in the connecting hole of the bracket 8 which has a corresponding shape for fixing. In the second manner, the diameter of the connecting end 91 can be larger than the diameter of the rod portion of the fastening member 9, and the circumference of the connecting end 91 is surrounded with jagged teeth. By pressing the connecting end 91 and the bracket 8 with each other, the jagged teeth at the periphery of the connecting end 91 will engaged into the inner edge of the connecting hole of the bracket 8 to be fixed. In the third manner, a convex portion may be formed on the bottom of the cap body 911, and the cap body 911 and the bracket 8 may be separately electrified to allow the convex portion of the cap body 911 to be caught in the top of the bracket 8 to be fixed.

In summary, the present invention has the following effects as compared with the prior art. Under the premise that the positions of the mounting holes of the seat are fixed and the height of the seat height adjusting device are not increased, the structure strength of the seat height adjusting device can be enhanced, and the seat height adjusting device can be easily installed and fixed to the seat in a general manner (for example, using tools such as a screwdriver or a wrench).

Moreover, the present invention has other effects. Firstly, under the premise of not increasing the height and not widening the seat height adjusting device, the teeth at the back of the driving plate 400 are manufactured by a forging processing; therefore, the cost is high. Since the present invention has been enlarged radially, the teeth at the back surface of the driving plate 400 can be made by a general processing (for example, fine punching), thus it has the effect of cost reduction. Secondly, both inner and outer walls provided for being pushed by the second acting component 6 can be radially enlarged and thickened (For example, the thickened ring wall of the annular body 5), therefore, even if the number of the second active components 6 is reduced, the external force can be evenly distributed. Thus, it also has the effect of cost reduction.

## Claims

1. A seat height adjustment device for fixing to a plurality of mounting holes of a seat, comprising:
a brake mechanism (500) including a bracket (8), and the bracket having a plurality of fastening components (9) that can be separately fixed corresponding to each of the mounting holes and cannot rotate with respect to the bracket (8); each fastening component having a connecting end (91) connected to the bracket; and
a clutch mechanism (100) being coaxially arranged with the brake mechanism (500); the clutch mechanism (100) including a cover (1), and the cover having an outer diameter enlarged with respect to each of the connecting ends such that when the cover is correspondingly combined with the bracket it partially or completely obscures the connecting ends.

2. The seat height adjustment device according to claim 1, wherein the clutch mechanism (100) having an outer diameter enlarged with respect to each of the connecting ends.

3. The seat height adjustment device according to claim 1, further including a driving disk (400), wherein the driving disk is disposed between the clutch mechanism and the brake mechanism, and the clutch mechanism drives the brake mechanism through the driving disk.

4. The seat height adjustment device according to claim 3, wherein the driving disk has an outer diameter enlarged with respect to each of the connecting ends.

5. The seat height adjustment device according to claim 3, wherein the brake mechanism further includes an annular body (5) having an outer diameter enlarged with respect to each of the connecting ends, and the annular body is disposed between the driving disk and the bracket and partially or completely obscures each of the connecting ends.

6. The seat height adjustment device according to claim 5, wherein each of the fastening components (9) is formed with a cap (911) corresponding to each of the connecting ends, and a periphery of the annular body is formed with a plurality of notches (52) corresponding to the caps.

7. The seat height adjustment device according to claim 1, wherein each of the fastening components (9) is a post, and the post is a self-clinching fastener, a press fastener or a solder fastener.

8. The seat height adjustment device according to claim 7, wherein the post is a bolt or a rivet.

9. The seat height adjustment device according to claim 1, wherein each of the connecting ends is close to a periphery (82) of the bracket, and each of the connecting ends is located within a periphery (11) of the cover or correspondingly located at a periphery (11) of the cover.

10. The seat height adjustment device according to claim 1, wherein the bracket is provided with a plurality of connecting holes (81) corresponding to the mounting holes, and the connecting ends of each fastening component are respectively fixed corresponding to the connecting holes.

## Patentansprüche

1. Sitzhöheneinstellvorrichtung zur Befestigung an einer Vielzahl von Befestigungslöchern eines Sitzes, umfassend:
einen Bremsmechanismus (500) mit einem Bügel (8), wobei der Bügel eine Vielzahl von Befestigungskomponenten (9) aufweist, die separat entsprechend jedem der Montagelöcher befestigt werden können und sich in Bezug auf den Bügel (8) nicht drehen können; wobei jede Befestigungskomponente ein mit dem Bügel verbundenes Verbindungsende (91) aufweist; und
einen Kupplungsmechanismus (100), der koaxial mit dem Bremsmechanismus (500) angeordnet ist; wobei der Kupplungsmechanismus (100) eine Abdeckung (1) umfasst und die Abdeckung einen Außendurchmesser aufweist, der in Bezug auf jedes der Verbindungsenden derart vergrößert ist, dass, wenn die Abdeckung entsprechend mit der Halterung kombiniert wird, sie die Verbindungsenden teilweise oder vollständig verdeckt.

2. Sitzhöheneinstellvorrichtung nach Anspruch 1, wobei der Kupplungsmechanismus (100) einen Außendurchmesser aufweist, der in Bezug auf jedes der Verbindungsenden vergrößert ist.

3. Sitzhöheneinstellvorrichtung nach Anspruch 1, die ferner eine Antriebsscheibe (400) aufweist, wobei die Antriebsscheibe zwischen dem Kupplungsmechanismus und dem Bremsmechanismus angeordnet ist und der Kupplungsmechanismus den Bremsmechanismus durch die Antriebsscheibe antreibt.

4. Sitzhöheneinstellvorrichtung nach Anspruch 3, wobei die Antriebsscheibe einen gegenüber jedem der Verbindungsenden vergrößerten Außendurchmesser aufweist.

5. Sitzhöheneinstellvorrichtung nach Anspruch 3, wobei der Bremsmechanismus ferner einen ringförmigen Körper (5) mit einem gegenüber jedem der Verbindungsenden vergrößerten Außendurchmesser aufweist, und der ringförmige Körper zwischen der Antriebsscheibe und der Halterung angeordnet ist und jedes der Verbindungsenden teilweise oder vollständig verdeckt.

6. Sitzhöheneinstellvorrichtung nach Anspruch 5, wobei jedes der Befestigungselemente (9) mit einer Kappe (911) ausgebildet ist, die jedem der Verbindungsenden entspricht, und ein Umfang des ringförmigen Körpers mit einer Vielzahl von Kerben (52) ausgebildet ist, die den Kappen entsprechen.

7. Sitzhöheneinstellvorrichtung nach Anspruch 1, wobei jede der Befestigungskomponenten (9) ein Pfosten ist und der Pfosten ein selbstklemmendes Befestigungselement, ein Druckbefestigungselement oder ein Lötbefestigungselement ist.

8. Sitzhöheneinstellvorrichtung nach Anspruch 7, wobei die Stütze eine Schraube oder ein Niet ist.

9. Sitzhöheneinstellvorrichtung nach Anspruch 1, wobei sich jedes der Verbindungsenden nahe an einem Umfang (82) der Halterung befindet und jedes der Verbindungsenden innerhalb eines Umfangs (11) der Abdeckung oder entsprechend an einem Umfang (11) der Abdeckung angeordnet ist.

10. Sitzhöheneinstellvorrichtung nach Anspruch 1, wobei die Halterung mit einer Vielzahl von Verbindungslöchern (81) versehen ist, die den Befestigungslöchern entsprechen, und die Verbindungsenden jedes Befestigungsteils jeweils entsprechend den Verbindungslöchern befestigt sind.

## Revendications

1. Un dispositif de réglage de hauteur de siège pour la fixation à une pluralité de trous de montage d'un siège, comprenant:
un mécanisme de freinage (500) comprenant un support (8), et le support ayant une pluralité de composants de fixation (9) qui peuvent être fixés séparément correspondant à chacun des trous de montage et ne pouvant pas tourner par rapport au support (8); chaque composant de fixation ayant une extrémité de connexion (91) connectée au support; et
un mécanisme d'embrayage (100) disposé coaxialement avec le mécanisme de freinage (500); le mécanisme d'embrayage (100) comprenant un couvercle (1), et le couvercle ayant un diamètre extérieur agrandi par rapport à chacune des extrémités de connexion de telle sorte que lorsque le couvercle est combiné en correspondance au support, celui-ci obscurcit partiellement ou complètement les extrémités de connexion.

2. Le dispositif de réglage de hauteur de siège selon la revendication 1, dans lequel le mécanisme d'embrayage (100) a un diamètre extérieur agrandi par rapport à chacune des extrémités de connexion.

3. Le dispositif de réglage de hauteur de siège selon la revendication 1, comprenant en outre un disque d'entraînement (400), dans lequel le disque d'entraînement est disposé entre le mécanisme d'embrayage et le mécanisme de freinage, et le mécanisme d'embrayage entraîne le mécanisme de freinage à travers le disque d'entraînement.

4. Le dispositif de réglage de hauteur de siège selon la revendication 3, dans lequel le disque d'entraînement a un diamètre extérieur agrandi par rapport à chacune des extrémités de connexion.

5. Le dispositif de réglage de hauteur de siège selon la revendication 3, dans lequel le mécanisme de freinage comprend en outre un corps annulaire (5) ayant un diamètre extérieur agrandi par rapport à chacune des extrémités de connexion, et le corps annulaire est disposé entre le disque d'entraînement et le support et obscurcit partiellement ou complètement chacune des extrémités de connexion.

6. Le dispositif de réglage de hauteur de siège selon la revendication 5, dans lequel chacun des composants de fixation (9) est formé avec un capuchon (911) correspondant à chacune des extrémités de connexion, et une périphérie du corps annulaire est formée avec une pluralité d'encoches (52) correspondant aux capuchons.

7. Le dispositif de réglage de hauteur de siège selon la revendication 1, dans lequel chacun des composants de fixation (9) est un montant, et le montant est un élément de fixation autobloquant, un bouton pression ou un élément de soudure.

8. Le dispositif de réglage de hauteur de siège selon la revendication 7, dans lequel le montant est un boulon ou un rivet.

9. Le dispositif de réglage de hauteur de siège selon la revendication 1, dans lequel chacune des extrémités de connexion est proche d'une périphérie (82) du support, et chacune des extrémités de connexion est située à l'intérieur d'une périphérie (11) du couvercle ou située de manière correspondante à une périphérie (11) du couvercle.

10. Le dispositif de réglage de hauteur de siège selon la revendication 1, dans lequel le support est pourvu d'une pluralité de trous de connexion (81) correspondant aux trous de montage, et les extrémités de connexion de chaque composant de fixation sont respectivement fixées correspondant aux trous de connexion.
